# EUROPÄISCHE PATENTSCHRIFT

(11) **EP 1 634 502 B1**
(45) Veröffentlichungstag und Bekanntmachung des Hinweises auf die Patenterteilung: **14.05.2008**
(21) Anmeldenummer: 05019034.7
(22) Anmeldetag: 01.09.2005
(51) Int. Cl.: A23D 7/00, A23D 7/04, A23L 1/30, A23L 2/00, A23C 9/00

(54) **Emulsionen mit ungesättigten Fettsäuren und deren Estern**
Emulsions containing unsaturated fatty acids and esters thereof
Emulsions contenant des acides gras insaturés et leurs esters

(30) Priorität: 10.09.2004 DE 102004043824
(43) Veröffentlichungstag der Anmeldung: 15.03.2006
(73) Patentinhaber: Cognis IP Management GmbH, 40589 Düsseldorf (DE)
(72) Erfinder: Eskuchen, Rainer, 40764 Langenfeld (DE); Gierke, Jürgen, 89257 Illertissen/Betlinshausen (DE); Horlacher, Peter, 89287 Bellenberg (DE)

(56) Entgegenhaltungen:
- EP-A- 0 148 303
- WO-A-00/21379
- WO-A-02/41706
- US-A1- 2004 170 709
- DATABASE WPI Section Ch, Week 200341 Derwent Publications Ltd., London, GB; Class D13, AN 2002-169221 XP002360924 & KR 371 549 B (DAVID K) 6. Februar 2003 (2003-02-06)

## Beschreibung

### Gebiet der Erfindung

Die Erfindung befindet sich auf dem Gebiet der Lebensmittel und betrifft Emulsionen die konjugierte Linolsäure und deren Derivate enthalten, ein Verfahren zur Herstellung desselben sowie Lebensmittel, insbesondere Getränke, die diese Emulsionen beinhalten.

### Stand der Technik

Der Einsatz von konjugierter Linolsäure (conjugated linoleic acid - CLA) und ihren Derivaten in Lebensmitteln und pharmazeutischen Zubereitungen ist bereits über Jahre bekannt. Vorwiegend wurden CLA und ihre Derivate als Nahrungsergänzungsmittel in Pulver oder Kapselform angeboten. Zunehmend wurde das Dietetikum auch direkt in Nahrungsmittel eingearbeitet. So will man CLA und CLA-Verbindungen auch in Getränken und Milchprodukten anbieten und sucht nach einer Verarbeitungsform der lipophilen Verbindung, die vorteilhaft für die Formulierung in wässrigen Nahrungsgrundlagen geeignet ist.

In pharmazeutischen Präparaten dienen Emulsionen und Lotionen häufig als Vehikel um ungesättigte Fettsäuren oder deren Derivate dem Körper zuzuführen.
Beispielsweise sind aus der Internationalen Anmeldung WO 2004/045506 A2 Emulsionen enthaltend CLA, Aminosäuren und Wasser bekannt. Eine CLA-haltige Emulsion zur oralen Applikation, die zusätzlich omega-3 Fettsäuren und Vitamine enthält, wird in der US Anmeldung US 2004/0037892 A1 beschrieben.
In der Internationalen Anmeldung WO 02/070014 A1 werden Öl-in-Wasser Emulsionen offenbart, die konjugierte Linolsäure, deren Isomere oder Derivate enthält und zur parenteralen, oralen oder topischen Applikation an Mensch und Tier eingesetzt werden kann. Für pharmazeutische Anwendungen werden als Emulgatoren häufig hochreine Phospholipide eingesetzt, die für die Anwendung im Lebensmittelbereich aus Kostengründen vermieden werden sollen. Häufig versucht man bei dem Einsatz im Foodbereich aus ethischen Gründen auf Emulgatoren aus tierischer Herstellung zu verzichten.
Aus dem Lebensmittelbereich sind Emulsionen mit einem besonderen Antioxidationssystem bestehend aus Lecithinen und Citraten bekannt, die ölhaltige Emulsionen mit hohen Anteilen ungesättigter Fettsäuren stabilisieren **(**EP 0884 952 B1**).**

Ebenfalls aus dem Nahrungsmittelbereich stammend wäre die Internationalen Anmeldung WO 00/21379 zu erwähnen, in der Öl-in-Wasser Emulsionen basierend auf Milcherzeugnissen, die Mono-, Di- und Triglyceride von CLA enthalten, beansprucht werden.

WO 02/41706 offenbart, insbesondere in den Beispielen 16 und 18, Emulsionen von CLA-Triglyceriden. Diese enthalten jedoch keine pflanzlichen Lecithinmischungen wie dies bei den Emulsionen gemäß der vorliegenden Erfindung der Fall ist.

Aufgabe der vorliegenden Erfindung ist es, CLA und CLA-derivate in einer physikalischchemisch stabilen Formulierung zur Verfügung zu stellen, die eine einfache und kostengünstige Einarbeitung von konjugierter Linolsäure und ihren Derivaten in Getränke und Milcherzeugnisse ermöglicht. Der Zusatz der CLA-Formulierung soll die Lagerstabilität und die Organoleptik der CLA-angereicherten Getränke und Milchprodukte nicht negativ beeinflussen.

### Beschreibung der Erfindung

Gegenstand der Erfindung sind Emulsionen, enthaltend
a) 0,1 bis 50 Gew. % konjugierte Linolsäure oder Derivate der konjugierten Linolsäure
b) 0,1 bis 30 Gew. % pflanzliche Lecithinmischungen
c) 0 bis 20 Gew. % Co-Emulgatoren
d) 0 bis 70 Gew. % Polyole
e) 0 bis 70 Gew. % Kohlenhydrate
f) 0 bis 1 Gew. % Antioxidantien
g) 20 bis 99 Gew. % wässrige Phase,
mit der Maßgabe, dass die Emulsion keine weiteren Öle und Fette mit Ausnahme der gegebenenfalls vorliegenden Triglyceride der Komponenten a), b) und/oder c) enthält.

Die so zusammengesetzten Emulsionen sollen in Fruchtsäfte, Fruchtsaftgemische, Fruchtsaftgetränke, Gemüsesäfte, Kohlensäurehaltige und Kohlensäurefreie Getränke, Sojamilchgetränke oder proteinreiche flüssige Nahrungsersatzgetränke, sowie Milchprodukte wie Milch, fermentierte Milchzubereitungen, Joghurt, Trinkjoghurt, oder Käsezubereitungen eingearbeitet werden.

Überraschenderweise haben die Emulsionen eine ausgezeichnete Lagerstabilität und können einfach in die Getränke und Milchprodukte eingearbeitet werden, ohne das es zu einer Entmischung, d.h. zu einem Aufrahmen, Bodensatz oder Ringbildung der CLA-haltigen Produkte kommt. Da der lipophilere Anteil der Emulsion fast ausschließlich aus CLA und/oder ihren Derivaten besteht, lassen sich die Formulierungen sehr gut in wässrige Getränke einarbeiten, in denen sie in fein verteilter Form vorliegen ohne nach längerer

Lagerung der Getränke zu einem unansehnlichen und geschmacksverschlechtemden Aufschwimmen des Ölanteils zu führen.
Ein zusätzlicher Vorteil ist die Möglichkeit die Getränke direkt als Wasserphase bei der Herstellung der Emulsionen einzusetzen.

Ein weiterer Gegenstand der Erfindung sind daher Getränke und Milcherzeugnisse, die die Emulsionen der genannten Zusammensetzung enthalten. Vorteilhafterweise enthalten die Getränke oder Milchprodukte die Emulsionen in Mengen von 0,1 bis 20 Gew.%, vorzugsweise 0,5 bis 10 Gew. %, insbesondere 1 bis 5 Gew. % bezogen auf das Gewicht des CLA-haltigen Nahrungsmittels.

### Herstellung

Das Lecithin und gegebenenfalls die Coemulgatoren werden bei 20 - 70 °C unter Rühren in der "wässerigen" Phase gelöst oder vordispergiert. Anschließend werden weitere Rezepturbestandteile bis auf die konjugierte Fettsäure / Fettsäurederivate in der "wässerigen" Phase gelöst oder dispergiert. Dann wird CLA oder CLAderivate zugegeben und gegebenenfalls mit schnell drehenden Mischern oder Rotor-Stator-Homogenisatoren, vorzugsweise mit einem Ultra-Turrax, vorhomogenisiert. Anschließend kann die Emulsion in einem weiteren Verfahrensschritt mit einem weiteren Hochleistungshomogenisierapparat homogenisiert werden. Dieser Verfahrensschritt kann mehrfach durchlaufen werden. Es ergibt sich dabei ein Energieeintrag von ungefähr 1 x 10⁵ bis 2 x 10⁸ J m-3 .

Als Homogenisierapparate können Hochdruckdispergiersysteme wie z.B. Radialdiffusoren mit Flachventil oder Zackenventil; Gegenstrahldispergatoren wie z.B. der Microfluidizer; Strahldispergatoren oder Blendensysteme eingesetzt werden. Als Dispergiersysteme eignen sich weiter Rotor-Stator-Systeme, Ultraschallsysteme, Kugelmühlen oder Membranen. Zum Vordispergieren werden vorzugsweise Rotor-Stator- Systeme wie z.B. Kolloidmühlen oder Zahnkranzdispergiermaschinen eingesetzt.
Das Verfahren bietet auch die Möglichkeit die Emulgatoren und gegebenenfalls Co-emulgatoren mit der CLA und/oder den CLA-derivaten direkt in den Getränken oder dünnflüssigen Milchprodukten als wässriger Phase mit dem Rotor-Stator-System vorzuemulgieren und anschließend z.B. die Hochdruckemulgierung anzuschließen. Je nach Konzentration der gewählten Einsatzstoffe kann so ein CLA-haltiges Getränkekonzentrat oder auch das fertige CLA-haltige Endprodukt hergestellt werden.
Neben den eingesetzten Inhaltsstoffen, insbesondere den Emulgatoren ist das Dispergierverfahren von essentieller Wichtigkeit für die physikalisch-chemische Stabilität der Emulsionen, da es in einer definierten Teilchengrößenverteilung der emulgierten Tröpfchen resultiert, die wiederum die Kurzzeit- und die Langzeitstabilität der Emulsionen bestimmt.

### Teilchengrößenbestimmung

Emulsionen sind thermodynamisch instabil, da sie in Abhängigkeit von der Teilchengröße der inneren Phase eine hohe Grenzfläche und daraus folgend eine hohe Grenzflächenenergie aufweisen. Trotzdem bezeichnet man sie als stabil, wenn sich ihr Dispersitätsgrad mit der Lagerzeit oder unter Stressbedingungen nicht wesentlich verändert. Hierbei können bei oral applizierten im Lebensmittelbereich verwendeten Emulsionen wesentlich größere Teilchengrößen akzeptiert werden als im pharmazeutischen Bereich der Parenteralia. Dennoch wurde festgestellt, dass Emulsionen, die eine kleinere Anfangsteilchengröße aufweisen, eine wesentlich höhere Endstabilität aufweisen resp. dass die Zeit bis zum Erreichen der maximal tolerierbaren Teilchengröße und die Zeit bis zum Aufrahmen und somit die Lagerzeit entscheidend verlängert wird. Außerdem überstehen Emulsionen mit einer sehr kleinen Teilchengrößenverteilung wesentlich besser Stresstests wie Frier-Tauzyklen, Autoklavieren oder mechanische Belastung beispielsweise in der Ultrazentrifuge.
Es ist daher zur Bestimmung der Stabilität essentiell, die Teilchengrößenerteilung von Emulsionen direkt nach der Herstellung und in bestimmten Zeitabständen zu messen.

Die Teilchengrößenverteilung wurde mit einem Gerät der Fa. Beckman Coulter, Typ LS 230 unter Nutzung des optischen Models Emulsion.rfd PIDS inclded (vom 14.08.01) nach Bedienungsanleitung (1994) bestimmt. Als Messmedium wurde Wasser verwendet. Die Teilchengrößenmessungen erfolgten unmittelbar nach der Herstellung der Dispersionen. Ausgewählte Dispersionen wurden einem Lagertest (siehe Beispiele) unterzogen.

### Konjugierte Linolsäure und Derivate der konjugierten Linolsäure

Der Begriff "konjugierte Linolsäure", (CLA, "conjugated linoleic acid") umfasst alle positionellen und strukturellen Isomere und Gemische aus zwei oder mehr Isomeren der Linolsäure oder Octadecadiensäure mit zwei konjugierenden Kohlenstoffdoppelbindungen, also alle cis- und trans Isomere ("E/Z Isomere") der 2,4-octadecadienoic acid, 4,6-octadecadienoic acid, 6,8-octadecadienoic acid, 7,9-octadecadienoic acid, 8,10-octadecadienoic acid, 9,11-octadecadienoic acid and 10,12 octadecadienoic acid, 11, 13 octadecadienoic acid.

Vor allem C18 : 2 cis-9, trans-11 und C18 : 2 trans-10, cis-12 Isomere, die die biologisch aktivsten Isomere darstellen, sind von besonderem Interesse.

Die reine CLA wird vielfach durch Verseifung linolsäurehaltiger Öle gewonnen. Um den Gehalt an Isomeren besser zu steuern, kann auch über die entsprechenden Ester als Vorprodukte gegangen werden. Stand der Technik ist hier die Herstellung der entsprechenden Ester durch Veresterung der Fettsäuren mit Methanol oder Ethanol. In der Literatur ist beschrieben, dass als Ausgangsstoffe für eine schonende Konjugierung insbesondere die Methyl- und Ethylester von Linolsäure geeignet sind **[**WO 99/47135**].**

Bei der Isomerisierung erfolgt eine Umlagerung der Linolsäure vorwiegend zum c9,t11 und t10,c12 Isomer, was bei einer sorgfältig kontrollierten Reaktion bis zu 90 % der Isomere betrifft. Vorteilhafterweise liegen dann auch weniger als 1 % der Isomere als 11, 13 Isomere, weniger als 1 % als 8,10 Isomere, und weniger als 1 % als trans, trans - Isomere (t9,t11 und t10,t12 Isomere), sowie weniger als 1 % als nicht zu identifizierende Verbindungen vor. Ein Prozess wie in der deutschen Anmeldung DE 102 36086 beschrieben resultiert in einem Verhältnis der Hauptisomeren *cis-*9*,trans-*11 und *trans-10, cis-*12 zu annähernd gleichen Teilen, von 1 : 1.2 bis 1.2 : 1.
Zu den Derivaten der konjugierten Linolsäure zählen neben konjugiertem Linolsäurealkohol vorzugsweise die Ester. Bekannt sind Linolsäureniedrigalkylester, mit einem Acylrest der konjugierten Linolsäure und einem linearen oder verzweigten Alkylrest mit 1 bis 5 Kohlenstoffatomen. Insbesondere werden konjugierte Linolsäuremethyl- und/oder -ethylester eingesetzt. Die Herstellung dieser Ester kann nach dem Verfahren, das in der Internationalen Anmeldung WO 03/022964 beschrieben ist, vorteilhaft erfolgen.

Besonders bevorzugt sind Ester des Glycerins mit CLA wie Mono-, Di- und insbesondere Triglyceride der konjugierten Linolsäure. Die besonders bevorzugten Triglyceride sind auch unter dem Handelsnamen Tonalin TG 80 (Cognis Deutschland GmbH & Co. KG) bekannt. CLAtriglyceride können nach den von der Anmelderin beschriebenen Verfahren gemäß der deutschen Patentschrift DE 197 18245 C2 und der Internaionalen Anmeldung WO 03/022964 hergestellt werden.
Die konjugierte Linolsäure und/oder ihre Derivate werden in den Emulsionen in einer Menge von 0,1 bis 50 Gew. %, vorzugsweise 0,5 bis 30 Gew. % , besonders bevorzugt 1 bis 25 Gew. % und speziell 3 bis 20 Gew. % bezogen auf das Gesamtgewicht der Emulsion eingesetzt.

### Pflanzliche Lecithingemische

Im chemischen Sinn wird der Begriff Lecithin für das Phosphatidylcholin (PC) verwendet. Allgemein werden jedoch durch den Begriff Lecithin Stoffgemische beschrieben, die neben den Phospholipiden (z.B. Phosphoglyceride, Spingomyeline) als eigentliche Wirkstoffe z.B. auch Öle, Sterole oder Kohlenhydrate enthalten können (siehe Ullmann's Encyclopedia of Industrial Chemistry, 2002, Autor: Hiroyuki Tanno- Internet online). Handelsübliche Lecithine werden z.B. als gereinigte, entölte, hydrierte, hydrolysierte oder an bestimmten Wirkstoffen mehr oder weniger hoch angereicherte / aufgereinigte Produkte angeboten.
Phospholipide sind Bestandteile der Zellmembranen aller Lebewesen und in großer Menge in Eidotter, Hirn und pflanzlichen Samenzellen zu finden.

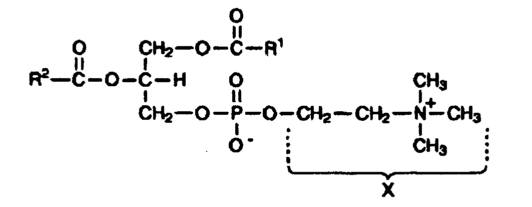

Fig. 1: Struktur von Phopholipiden; R¹, R²: stellen unverzweigte aliphatische Reste mit 11 bis 22, vorzugsweise 15 bis 18 Kohlenstoff-Atomen und 0 bis 4 cis-Doppelbindungen dar, X entspricht dem jeweiligen Phosphatidylrest hier Phosphatidylcholin, üblich sind beispielsweise auch Ethanolamin, Inosit, Serin.

Aus der Verschiedenheit der Fettsäure-Reste R¹ und R² ergibt sich eine große Zahl verschiedener Phospholipide. Bei Extraktionen aus biologischem Material erhält man immer Gemische, die für die Verwendung in pharmazeutischen Formulierungen weiter aufgereinigt werden. So enthält eine Fraktion aus Sojabohnen auch Palmitinsäure, Stearinsäure, Palmitoleinsäure, Oleinsäure, Linolsäure u. Linolensäure. Die Zusammensetzung des Soja-Lecithins variiert sehr stark, sie besteht beispielsweise aus 15 bis 50 % Phosphatidylcholin, 8 % bis 20 % Phosphatidylethanolamin, ca. 5 % bis 21 % Phosphatidylinosit , 1 - 2 % Phosphatidylserin, Sterinen, Fettsäuren, Kohlenhydraten und Fetten. Aus Eidottern erhaltenes Lecithin besteht dagegen im wesentlichen aus Phosphatidylcholin. Die aus Sojabohnen, Samen und für pharmazeutische Zubereitungen vorwiegend aus Eidotter gewonnenen Lecithine werden als Emulgatoren hauptsächlich in der Nahrungsmittelindustrie in Margarine, Schokolade, Backwaren und Überzugsmassen verwendet.

Im Gegensatz zu den im Stand der Technik bekannten CLA-haltigen Emulsionen, in denen Eilecithine, Phosphatidylcholin oder Phospholipide mit hohem Phosphatidylcholingehalt, sowie chemisch hochreine isolierte Phospholipide eingesetzt werden (WO 03/2/070014) sollen in der vorliegenden Erfindung als Lecithine nur pflanzliche Lecithingemische verwendet werden. Diese Lecithingemische können entölt, hydriert, hydrolysiert, Phosphatidylcholin oder Phosphatidylinositol angereichert sein. Überwiegend stammen diese Gemische vom Sojaöl ab, was jedoch nicht ausschließend für die Erfindung ist. Überraschenderweise konnte durch den Einsatz von Gemischen unterschiedlicher Lecithine im Gegensatz zu hochreinen Lecithinen stabilere Emulsionen hergestellt werden. Der Einsatz von Lecithingemischen ermöglicht zudem eine preiswertere Herstellung für den Nahrungsmittelbereich.
Vorzugsweise werden Lecithine mit einem Phosphatidylcholingehalt (incl. Lysophosphatidylcholin) von weniger als 80 %, besonders bevorzugt von maximal 75 % eingesetzt. Die pflanzlichen Lecithingemische werden in Mengen von 0,1 bis 30 Gew. %, bevorzugt 0,2 bis 20 Gew. % und besonders bevorzugt 0,5 bis 10 Gew. % in den Emulsionen eingesetzt.

Geeignete Handelspräparate sind beispielsweise:
- Premium® IPM: neuer Name Leciprime® 1800 IP
- Lipoid® S 75: ca. 75 % Phosphatidylcholin
- Phospholipon® 80: ca. 76 % Phosphatidylcholin
- Emultop® HL 50: entöltes, enzymatisch hydrolysiertes Lecithin, ca. 14 % Phosphatidylcholin
- Lipotin® NE: hydrolysiertes Lecithin

### Co-Emulgatoren

Als Co-emulgatoren eignen sich alle toxikologisch unbedenklichen, nahrungsmittelgeeigneten Emulgatoren, die in Kombination mit den Lecithingemischen eingesetzt werden können. Vorzugsweise werden Polyethylenglykolsorbitanfettsäureester (Tweens), Sorbitanfettsäureester (Spans), Glyceride, Saccharoseester, Poloxamere (Pluronics), darunter besonders bevorzugt Polyethylenglykolsorbitanfettsäureester, auch als Polysorbate bezeichnet und Saccharoseester. Wobei speziell Polysorbate, wie beispielsweise Polysorbat 80 und Polysorbat 60 eingesetzt werden.
Durch den Einsatz von pflanzlichen Lecithinmischungen wird ein zu hoher Gehalt an Polysorbaten, der die Getränke bitter schmecken lässt, vermieden, somit hat sich eine Kombination der Lecithinmischungen mit Polysorbaten besonders bewährt.
Co-emulgatoren müssen nicht zwingend in der Formulierung vorliegen, sie werden in Mengen von 0 bis 20 Gew. % bezogen auf die Emulsion, bevorzugt in Mengen von 0,05 bis 15 Gew. % und besonders bevorzugt zu 0,5 bis 10 Gew. % in den Emulsionen eingesetzt.

### Polyole

Auch die gegebenenfalls eingesetzten Polyole müssen toxikologisch unbedenklich und nahrungsmittelgeeignet sein. Es können Polyole wie beispielsweise Glycerin, Propylenglykol, Sorbitol, D-Mannitol oder Xylitol, darunter besonders bevorzugt Glycerin und Sorbitol als Polyole verwendet. Die geeigneten Mengen belaufen sich auf 0 bis 70 Gew.% bezogen auf das Gesamtgewicht der Emulsion. Bevorzugt werden 10 bis 70 Gew. % besonders bevorzugt 30 bis 60 Gew. % eingesetzt. Es wurde festgestellt, dass Gehalte von mindestens 10 Gew. % an Polyolen überraschenderweise zu einer feineren Teilchengrößenverteilung führen und die Stabilität der Emulsionen positiv beeinflussen.

### Kohlenhydrate

Die als Kohlenhydrate gegebenenfalls eingesetzten Verbindungen beinhalten alle lebensmittelgeeigneten Zucker, wie beispielsweise Glucose, Saccharose, Fructose, Trehalose, Maltose oder Lactose. Bevorzugt werden der Emulsion Glucose und Saccharose zugesetzt. Kohlenhydrate können in Mengen von 0 bis 70 Gew. %, vorzugsweise 10 bis 70 Gew. %, besonders bevorzugt 30 bis 60 Gew.% bezogen auf die Emulsionen in den Formulierungen enthalten sein.
Ebenso wie bei den Polyolen konnte überraschenderweise festgestellt werden, dass der Einsatz von Kohlenhydraten in Mengen von mindestens 10 Gew. % zu kleineren Teilchengrößenverteilungen und einer verbesserten Stabilität führen.

### Antioxidantien

Als Antioxidantien können den Emulsionen Tocopherol, Tocopherolderivate und/oder Ascorbinsäure in Mengen von 0 bis 1 Gew. % bezogen auf das Gesamtgewicht der Emulsion zur Oxidationsstabilisierung zugesetzt werden.

### Wässrige Phase

Üblicherweise bildet gereinigtes Wasser, das gegebenenfalls nahrungsmittelgeeignete Salze und weitere wasserlösliche Additive enthält die wässrige Phase. Wie bereits unter den Herstellungsverfahren beschrieben können aber auch direkt Frucht- oder Gemüsesäfte, Fruchtsaftgetränke, Milch, Milchmischgetränke, Sport-Getränke als wässrige Phase eingesetzt werden. Vorzugsweise wird diese Phase vor der Emulgierung auf einen pH-Wert unterhalb 7, besonders bevorzugt unterhalb 4 eingestellt, insbesondere in Fruchtsäften trägt die saure pH-Werteinstellung zu einer verbesserten Stabilität der Endformulierung bei. Die pH-Wert einstellung kann mit üblichen nahrungsmittelgeeigneten Säuren wie beispielsweise verdünnter Salzsäure oder Citronensäure erfolgen. Die fertige Emulsion sollte einen pH-Wert unterhalb 8, vorzugsweise unterhalb 6,5 aufweisen.

### Emulsionsrezepturen

Aufgrund der verbesserten Langzeitstabilität und Verarbeitbarkeit in Getränken oder Milchprodukten werden die folgenden Emulsionsrezepturen bevorzugt:
**A)** Emulsionen, enthaltend
   a) 0,5 bis 40 Gew. % konjugierte Linolsäure oder Derivate der konjugierten Linolsäure
   b) 0,2 bis 20 Gew. % pflanzliche Lecithinmischungen
   c) 0 bis 20 Gew. % Co-Emulgatoren
   d) 0 bis 70 Gew. % Polyole
   e) 0 bis 70 Gew. % Kohlenhydrate
   f) 0 bis 1 Gew. % Antioxidantien
   g) 20 bis 99 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.
**B)** Emulsionen, enthaltend
   a) 0,5 bis 40 Gew. % konjugierte Linolsäure oder Derivate der konjugierten Linolsäure
   b) 0,2 bis 20 Gew. % pflanzliche Lecithinmischungen
   c) 0 bis 20 Gew. % Co-Emulgatoren
   d) 10 bis 70 Gew. % Polyole
   e) 0 bis 70 Gew. % Kohlenhydrate
   f) 0 bis 1 Gew. % Antioxidantien
   g) 20 bis 89 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.
**C)** Emulsionen, enthaltend
   a) 0,5 bis 40 Gew. % konjugierte Linolsäure oder Derivate der konjugierten Linolsäure
   b) 0,2 bis 20 Gew. % pflanzliche Lecithinmischungen
   c) 0 bis 20 Gew. % Co-Emulgatoren
   d) 0 bis 70 Gew. % Polyole
   e) 10 bis 70 Gew. % Kohlenhydrate
   f) 0 bis 1 Gew. % Antioxidantien
   g) 20 bis 89 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.
**D)** Emulsionen, enthaltend
   a) 0,5 bis 40 Gew. % konjugierte Linolsäure oder Derivate der konjugierten Linolsäure
   b) 0,2 bis 20 Gew. % pflanzliche Lecithinmischungen
   c) 0,1 bis 15 Gew. % Co-Emulgatoren
   d) 0 bis 70 Gew. % Polyole
   e) 0 bis 70 Gew. % Kohlenhydrate
   f) 0 bis 1 Gew. % Antioxidantien
   g) 20 bis 99 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.
**E)** Emulsionen, enthaltend
   a) 0,5 bis 40 Gew. % konjugierte Linolsäure oder Derivate der konjugierten Linolsäure
   b) 0,2 bis 20 Gew. % pflanzliche Lecithinmischungen
   c) 0,1 bis 15 Gew. % Co-Emulgatoren
   d) 10 bis 70 Gew. % Polyole
   e) 0 bis 70 Gew. % Kohlenhydrate
   f) 0 bis 1 Gew. % Antioxidantien
   g) 20 bis 89 Gew. % wässerige Phase, mit der Maßgabe, dass die Emulsion keine weiteren Öle und Fette mit Ausnahme der gegebenenfalls vorliegenden Triglyceride der Komponenten a), b) und/oder c) enthält.
**F)** Emulsionen, enthaltend
   a) 0,5 bis 40 Gew. % konjugierte Linolsäure oder Derivate der konjugierten Linolsäure
   b) 0,2 bis 20 Gew. % pflanzliche Lecithinmischungen
   c) 0,1 bis 15 Gew. % Co-Emulgatoren
   d) 0 bis 70 Gew. % Polyole
   e) 10 bis 70 Gew. % Kohlenhydrate
   f) 0 bis 1 Gew. % Antioxidantien
   g) 20 bis 89 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.

Besonders bevorzugt werden Emulsionen der folgenden Zusammensetzungen:
**G)** Emulsionen, enthaltend
   a) 1 bis 30 Gew. % konjugierte Linolsäure oder Derivate der konjugierten Linolsäure
   b) 0,5 bis 10 Gew. % pflanzliche Lecithinmischungen
   c) 0 bis 15 Gew. % Co-Emulgatoren
   d) 0 bis 70 Gew. % Polyole
   e) 0 bis 70 Gew. % Kohlenhydrate
   f) 0 bis 1 Gew. % Antioxidantien
   g) 20 bis 98 Gew. % wässerige Phase, mit der Maßgabe, dass die Emulsion keine weiteren Öle und Fette mit Ausnahme der gegebenenfalls vorliegenden Triglyceride der Komponenten a), b) und/oder c) enthält.
**H)** Emulsionen, enthaltend
   a) 1 bis 30 Gew. % konjugierte Linolsäure oder Derivate der konjugierten Linolsäure
   b) 0,5 bis 10 Gew. % pflanzliche Lecithinmischungen
   c) 0 bis 15 Gew. % Co-Emulgatoren
   d) 10 bis 70 Gew. % Polyole
   e) 0 bis 70 Gew. % Kohlenhydrate
   f) 0 bis 1 Gew. % Antioxidantien
   g) 20 bis 88 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.
**I)** Emulsionen, enthaltend
   a) 1 bis 30 Gew. % konjugierte Linolsäure oder Derivate der konjugierten Linolsäure
   b) 0,5 bis 10 Gew. % pflanzliche Lecithinmischungen
   c) 0 bis 15 Gew. % Co-Emulgatoren
   d) 0 bis 70 Gew. % Polyole
   e) 10 bis 70 Gew. % Kohlenhydrate
   f) 0 bis 1 Gew. % Antioxidantien
   g) 20 bis 88 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.
**J)** Emulsionen, enthaltend
   a) 1 bis 30 Gew. % konjugierte Linolsäure oder Derivate der konjugierten Linolsäure
   b) 0,5 bis 10 Gew. % pflanzliche Lecithinmischungen
   c) 0,1 bis 15 Gew. % Co-Emulgatoren
   d) 0 bis 70 Gew. % Polyole
   e) 0 bis 70 Gew. % Kohlenhydrate
   f) 0 bis 1 Gew. % Antioxidantien
   g) 20 bis 98 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.
**K)** Emulsionen, enthaltend
   a) 1 bis 30 Gew. % konjugierte Linolsäure oder Derivate der konjugierten Linolsäure
   b) 0,5 bis 10 Gew. % pflanzliche Lecithinmischungen
   c) 0,5 bis 10 Gew. % Co-Emulgatoren
   d) 10 bis 70 Gew. % Polyole
   e) 0 bis 70 Gew. % Kohlenhydrate
   f) 0 bis 1 Gew. % Antioxidantien
   g) 20 bis 88 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.

Speziell bevorzugt werden die Emulsionen in der folgenden Zusammensetzung:
**L)** Emulsionen, enthaltend
   a) 3 bis 25 Gew. % konjugierte Linolsäure oder Derivate der konjugierten Linolsäure
   b) 0,5 bis 10 Gew. % pflanzliche Lecithinmischungen
   c) 0 bis 10 Gew. % Co-Emulgatoren
   d) 0 bis 70 Gew. % Polyole
   e) 0 bis 70 Gew. % Kohlenhydrate
   f) 0 bis 1 Gew. % Antioxidantien
   g) 20 bis 96 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.
**M)** Emulsionen, enthaltend
   a) 3 bis 25 Gew. % konjugierte Linolsäure oder Derivate der konjugierten Linolsäure
   b) 0,5 bis 10 Gew. % pflanzliche Lecithinmischungen
   c) 0,1 bis 10 Gew. % Co-Emulgatoren
   d) 0 bis 70 Gew. % Polyole
   e) 0 bis 70 Gew. % Kohlenhydrate
   f) 0 bis 1 Gew. % Antioxidantien
   g) 20 bis 96 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.
**N)** Emulsionen, enthaltend
   a) 3 bis 25 Gew. % konjugierte Linolsäure oder Derivate der konjugierten Linolsäure
   b) 0,5 bis 10 Gew. % pflanzliche Lecithinmischungen
   c) 0,5 bis 10 Gew. % Co-Emulgatoren
   d) 30 bis 60 Gew. % Polyole
   e) 0 bis 70 Gew. % Kohlenhydrate
   f) 0 bis 1 Gew. % Antioxidantien
   g) 20 bis 66 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.
**O)** Emulsionen, enthaltend
   a) 3 bis 25 Gew. % konjugierte Linolsäure oder Derivate der konjugierten Linolsäure
   b) 0,5 bis 10 Gew. % pflanzliche Lecithinmischungen
   c) 0,5 bis 10 Gew. % Co-Emulgatoren
   d) 0 bis 70 Gew. % Polyole
   e) 30 bis 60 Gew. % Kohlenhydrate
   f) 0 bis 1 Gew. % Antioxidantien
   g) 20 bis 66 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.
**P)** Emulsionen, enthaltend
   a) 3 bis 25 Gew. % Triglyceride der konjugierten Linolsäure
   b) 0,5 bis 10 Gew. % pflanzliche Lecithinmischungen
   c) 0 bis 10 Gew. % Co-Emulgatoren
   d) 30 bis 60 Gew. % Polyole
   e) 0 bis 70 Gew. % Kohlenhydrate
   f) 0 bis 1 Gew. % Antioxidantien
   g) 20 bis 66 Gew. % wässerige Phase,
   mit der Maßgabe, dass die Emulsion keine weiteren Öle und Fette mit Ausnahme der gegebenenfalls vorliegenden Triglyceride der Komponenten a), b) und/oder c) enthält.

### Beispiele

### Allgemeine Herstellung (Parameter sind der Tabelle 1 zu entnehmen)

Soweit in der Rezeptur vorgesehen wird der Co-emulgator, gegebenenfalls zusammen mit den Polyolen und/oder den Kohlenhydraten bei 50 °C unter Rühren in der gesamten wässerigen Phase gelöst oder vordispergiert. Anschließend wird das Lecithin in dieser 50°C warmen Phase unter Rühren gelöst oder dispergiert.
Dann wird das CLAtriglycerid oder die freie CLA zugegeben und mit Hilfe eines Ultra Turrax (Fa. IKA Typ T50; Werkzeug S50N-G40G) bei 5200 U min⁻¹ 2 min. vorhomogenisiert. Anschließend wird die Voremulsion in einem weiteren Homogenisierschritt mit einem Hochdruckhomogenisator (Fa. APV; LAB 1000; bzw. LAB 60)) in der Regel bei 750 bar (siehe Tabelle 1) homogenisiert. Dieser Verfahrensschritt wird insgesamt bis zu 10 mal (siehe Tabelle 1) durchlaufen.

### Eingesetzte Handelsprodukte:

- Premium® IPM:: Lecithin, Fa. Cargill
- Emultop® HL 50:: Lecithin, Fa. Degussa
- Lipoid® S75:: Lecithin, Fa. Lipoid GmbH
- Phospholipon® 80:: Lecithin, Fa. Phospholipid GmbH
- Lipotin® NE:: Lecithin, Fa. Lucas Meyer
- Sisterna® SP 70:: Saccharoseester, Fa. Sisterna
- Tonalin® TG 80:: Triglycerid konjugierter Linolsäuren, Fa. Cognis
- Tonalin® FFA 80:: freie konjugierte Linolsäure, Fa. Cognis
- Copherol® 1250:: Tocopherolacetat, Fa. Cognis

**Tabelle 1a: Rezepturen und Herstellung CLA-6altiger Emulsionen und Getränke**

| | | 1 | 2 | 3 | 4 5 | | 6 |
|---|---|---|---|---|---|---|---|
| Wasser | [%] | 75,9 | 75,9 | 22,8 | 22,8 | 22,9 | 74,0 |
| Orangensaft²) | [%] | -- | -- | -- | -- | -- | -- |
| Orangensaftkonzentrat 55 °Brix | [%] | -- | -- | -- | -- | -- | -- |
| Tonalin FFA 80 | [%] | -- | -- | -- | -- | -- | -- |
| Tonalin TG 80 | [%] | 20,0 | 20,0 | 20,0 | 20,0 | 20,0 | 20,0 |
| **Lecithin** | | | | | | | |
| Premium IPM | [%] | -- | -- | -- | -- | -- | -- |
| Lipoid S75 | [%] | 4,0 | -- | -- | 4,0 | 4,0 | 4,0 |
| Phospholipon 80 | [%] | -- | 4,0 | -- | -- | -- | -- |
| Emultop HL50 | [%] | -- | -- | 4,0 | -- | -- | -- |
| Lipotin NE | [%] | -- | -- | -- | -- | -- | -- |
| Tween 60 | [%] | -- | -- | -- | -- | -- | -- |
| Tween 80 | [%] | -- | -- | -- | -- | -- | 2,0 |
| Sisterna SP 70 | [%] | -- | -- | -- | -- | -- | -- |
| Copherol 1250 | [%] | 0,1 | 0,1 | 0,1 | 0,1 | -- | -- |
| Glycerin | [%] | -- | -- | 53,1 | 53,1 | -- | -- |
| Saccharose | [%] | -- | -- | -- | -- | 53,1 | -- |
| **Tropfengröße** | | | | | | | |
| d₉₀ | [µm] | 0,232 | 0,227 | 0,281 | 0,127 | 0,134 | 0,186 |
| d_{3,2} | [µm] | 0,130 | 0,130 | 0,096 | 0,090 | 0,099 | 0,137 |
| **Hochdruckhomogenisator** | | LAB 1000 | LAB 1000 | LAB 1000 | LAB 1000 | LAB 1000 | LAB 1000 |
| Druck | [bar] | 750 | 750 | 750 | 1000 | 1000 | 750 |
| Anzahl der Durchläufe | | 5x | 5x | 5x | 5x | 10x | 5x |

**Tabelle 1b: Rezepturen und Herstellung CLA-haltiger Emulsionen und Getränke**

| | | 7 | 8 | 9 | 10 | 11 | 12 |
|---|---|---|---|---|---|---|---|
| Wasser | [%] | 75,9 | 36,0 | 74,0¹⁾ | 32,9¹) | 74,0 | -- |
| Orangensaft²⁾ | [%] | -- | -- | -- | -- | --- | 70,0 |
| Orangensaftkonzentrat 55 °Brix | [%] | -- | -- | -- | -- | -- | -- |
| Tonalin FFA 80 | [%] | -- | -- | -- | -- | -- | -- |
| Tonalin TG 80 | [%] | 20,0 | 20,0 | 20,0 | 10,0 | 20,0 | 20,0 |
| Lecithin | | | | | | | |
| Premium IPM | [%] | -- | -- | -- | -- | 8,0 | -- |
| Lipoid S75 | [%] | 4,0 | 4,0 | 4,0 | 4,0 | -- | 4,0 |
| Phospholipon 80 | [%] | -- | -- | -- | -- | -- | -- |
| Emultop HL50 | [%] | -- | -- | -- | -- | -- | -- |
| Lipotin NE | [%] | -- | -- | -- | -- | -- | -- |
| Tween 60 | [%] | -- | 2,0 | 2,0 | -- | -- | 2,0 |
| Tween 80 | [%] | -- | -- | -- | -- | -- | -- |
| Sistema SP 70 | [%] | -- | -- | -- | -- | 2,0 | -- |
| Copherol 1250 | [%] | 0,1 | -- | -- | -- | -- | -- |
| Glycerin | [%] | -- | 38,0 | -- | -- | -- | -- |
| Saccharose | [%] | -- | -- | -- | 53,1 | -- | -- |
| **Tropfengröße** | | | | | | | |
| d₉₀ | [µm] | 0,135 | 0,200 | 0,117 | 0,238 | 0,208 | 0,216 |
| d_{3,2} | [µm] | 0,101 | 0,132 | 0,079 | 0,123 | 0,134 | 0,146 |
| **Hochdruckhomogenisator** | | LAB 1000 | LAB 1000 | LAB 60 | LAB 1000 | LAB 1000 | LAB 60 |
| Druck | [bar] | 750 | 750 | 750/50 | 750 | 750 | 750/50 |
| Anzahl der Durchläufe | | 5x | 5x | 10x | 5x | 5x | 10x |

**Tabelle 1c: Rezepturen und Herstellung CLA-haltiger Emulsionen und Getränke**

| | | 13 | 14 | 15 | 16 | 17 | 18 | 19 |
|---|---|---|---|---|---|---|---|---|
| Wasser | [%] | 74,0 | 74,0 | 61,0 | 72,0 | 48,0 | 74,0 | -- |
| Orangensaft²⁾ | [%] | -- | -- | -- | -- | -- | -- | -- |
| Orangensaftkonzentrat 55 °Brix | [%] | -- | -- | -- | -- | -- | -- | 74,0 |
| Tonalin FFA 80 | [%] | -- | -- | -- | -- | -- | 20,0 | -- |
| Tonalin TG 80 | [%] | 20,0 | 20,0 | 30,0 | 20,0 | 40,0 | -- | 20,0 |
| **Lecithin** | | | | | | | | |
| Premium IPM | [%] | 4,0 | 4,0 | 6,0 | -- | 8,0 | 4,0 | 4,0 |
| Lipoid S75 | [%] | | | -- | -- | -- | -- | -- |
| Phospholipon 80 | [%] | -- | -- | -- | -- | -- | -- | -- |
| Emultop HL50 | [%] | -- | -- | -- | -- | -- | -- | -- |
| Lipotin NE | [%] | -- | -- | -- | 6,0 | -- | -- | -- |
| Tween 60 | [%] | -- | 2,0 | 3,0 | 2,0 | 4,0 | 2,0 | 2,0 |
| Tween 80 | [%] | -- | -- | -- | -- | -- | -- | -- |
| Sisterna SP 70 | [%] | 2,0 | -- | -- | -- | -- | -- | -- |
| Copherol 1250 | [%] | -- | -- | -- | -- | -- | -- | -- |
| Glycerin | [%] | -- | -- | -- | -- | -- | --- | -- |
| **Tropfengröße** | | | | | | | | |
| d₉₀ | [µm] | 0,234 | 0,196 | 0,159 | 0,227 | 5,827 | 0,185 | 2,799 |
| d_{3,2} | [nm] | 0,126 | 0,138 | 0,124 | 0,118 | 3,656 | 0,143 | 0,593 |
| **Hochdruckhomogenisator** | | LAB 60 | LAB 60 | LAB 60 | LAB 60 | -- | LAB 60 | LAB 60 |
| Druck | [bar] | 750/50 | 750/50 | 750/50 | 750/50 | -- | 750/50 | 750/50 |
| Anzahl der Durchläufe | | 10x | 10x | 10x | 1x | -- | 10x | 2x |

### Nachfolgende Charakterisierung

### Zentrifugentest

Die frisch hergestellten Emulsionen wurden mit destilliertem Wasser auf eine Konzentration von 1 Gew. % CLA verdünnt und in einem Zentrifugentest (Zentrifuge Heraeus Sepatech, Labofuge A) über 5 min. mit 5000 rpm belastet. Nachfolgend wurde die physikalische Stabilität durch eine optische Kontrolle der Phasenverteilung beurteilt (Tabelle 2).

### Teilchengrößenbestimmung

Die Teilchengrößenverteilung wurde mit einem Gerät der Fa. Beckman Coulter, Typ LS 230 unter Nutzung des optischen Models Emulsion.rfd PIDS inclded (vom 14.08.01) nach Bedienungsanleitung (1994) bestimmt. Als Messmedium wurde Wasser verwendet. Die Teilchengrößenmessungen erfolgten unmittelbar nach der Herstellung der Dispersionen.
Es wurden dabei jeweils verdünnte Emulsionen mit einer Konzentration von 1 Gew. % CLA hergestellt, d.h. eine entsprechende Menge der konzentrierten der CLA-Emulsionen wurde in dest. Wasser eingerührt (Tabelle 1).

### Lagertest

Ausgewählte Dispersionen wurden einem Lagertest unterzogen.
Zur Untersuchung der Lagerstabilität wurden die CLA-Emulsionen in 1 Gew. %iger Lösung in dest. Wasser bei 3 unterschiedlichen Bedingungen über 3 Wochen gelagert und optisch die Phasenverteilung beurteilt (Tabelle 3).
1. Raumtemperatur
2. Trockenschrank (ca. 40°C)
3. Kühlschrank (ca. 8°C)

### Ergebnisse

**Tabelle 2: Zentrifugentest**

| **Emulsion** | **Wasser-Emulsion** |
|---|---|
| **1** | Stabil, keine Trennung |
| **8** | Stabil, keine Trennung |
| **10** | Stabil, keine Trennung |
| **12** | Stabil, keine Trennung |
| **13** | Stabil, keine Trennung |
| **14** | Stabil, keine Trennung |

### Lagertest

**Tabelle 3: Optische Beurteilung der Getränke-Emulsionen:**

| **Beispiel** | **Lagerbeginn** | **nach 1 Woche** | **nach 3 Wochen** |
|---|---|---|---|
| 1 - Wasser - 8°C | Weiße, trübe feinverteilte Dispersion | Leichter Absatz, Ringbildung | Leichte Ringbildung, in Ordnung |
| 1 -Wasser - 20°C | | Leichter Absatz, Ringbildung | Ringbildung, in Ordnung |
| 1 - Wasser - 40°C | | Leichte Ringbildung, Bodensatz | Leichte Ringbildung, in Ordnung |
| 4 - Wasser - 8°C | Weiße, trübe feinverteilte Dispersion | Leichte Ringbildung | In Ordnung |
| 4 - Wasser - 20°C | | Leichte Ringbildung | Ringbildung, in Ordnung |
| 4 - Wasser - 40°C | | Leichte Ringbildung | Leichte Ringbildung, in Ordnung |
| 5 - Wasser - 8°C | Weiße, trübe feinverteilte Dispersion | Leichte Ringbildung | In Ordnung |
| 5 - Wasser - 20°C | | Leichte Abtrennung, Ringbildung, Bodensatz | Flockenbildung |
| 5-Wasser-40°C | | Stabil | Flockenbildung |
| 7 - Wasser - 8°C | Weiße, trübe feinverteilte Dispersion | Stabil | In Ordnung |
| 7 - Wasser - 20°C | | Leichte Ringbildung | Leichte Ringbildung, in Ordnung |
| 7 - Wasser - 40°C | | Leichte Ringbildung | In Ordnung |
| 8 - Wasser - 8°C | Weiße, trübe feinverteilte Dispersion | Leichte Ringbildung | In Ordnung |
| 8 - Wasser - 20°C | | Leichte Ringbildung | Ringbildung, Bodensatz |
| 8 - Wasser - 40°C | | Leichte Ringbildung | Ringbildung, in Ordnung |
| 9 - Wasser - 8°C | Weiße, trübe feinverteilte Dispersion | Stabil | In Ordnung |
| 9 - Wasser - 20°C | | Leichte Ringbildung | Leichte Ringbildung, Bodensatz |
| 9 - Wasser - 40°C | | Leichte Ringbildung | Ringbildung, in Ordnung |

## Patentansprüche

1. Emulsionen, enthaltend
a) 0,1 bis 50 Gew. % konjugierte Linolsäure oder Derivate der konjugierten Linolsäure
b) 0,1 bis 30 Gew. % pflanzliche Lecithinmischungen
c) 0 bis 20 Gew. % Co-Emulgatoren
d) 0 bis 70 Gew. % Polyole
e) 0 bis 70 Gew. % Kohlenhydrate
f) 0 bis 1 Gew. % Antioxidantien
g) 20 bis 99 Gew. % wässerige Phase
bezogen auf das Gesamtgewicht der Emulsion
mit der Maßgabe, dass die Emulsion keine weiteren Öle und Fette mit Ausnahme der gegebenenfalls vorliegenden Triglyceride der Komponenten a), b) und/oder c) enthält.

2. Emulsionen gemäß Anspruch 1, **dadurch gekennzeichnet, dass** als Komponente a) Triglyceride der konjugierten Linolsäure eingesetzt werden.

3. Emulsionen gemäß den Ansprüchen 1 und/oder 2, **dadurch gekennzeichnet dass** sie mindestens 10 Gew. % Polyole und/oder mindestens 10 Gew. % Kohlenhydrate enthalten.

4. Emulsionen, gemäß den Ansprüchen 1 bis 3, **dadurch gekennzeichnet, dass** sie als Co-emulgatoren Polysorbate enthalten.

5. Emulsionen, gemäß den Ansprüchen 1 bis 4, **dadurch gekennzeichnet, dass** sie als Polyole Glycerin und/oder Sorbitol enthalten.

6. Emulsionen, gemäß den Ansprüchen 1 bis 5, **dadurch gekennzeichnet, dass** sie als Kohlenhydrate Glucose und/oder Saccharose enthalten.

7. Getränke und Milchprodukte, enthaltend Emulsionen gemäß Anspruch 1.

8. Getränke und Milchprodukte nach Anspruch 8 enthaltend 0,1 bis 20 Gew.% der Emulsionen gemäß Anspruch 1 bezogen auf das Gesamtgewicht der CLA-haltigen Lebensmittel.

9. Verfahren zur Herstellung CLAhaltiger Getränke, bei dem man
a) Emulgatoren mit CLA und/oder Derivaten der CLA durch ein Rotor-Statorprinzip direkt im Getränk als wässriger Phase vorhomogenisiert und
b) nachfolgend hochdruckhomogenisiert,
wobei man als Emulgatoren pflanzliche Lecithingemische und gegebenenfalls Co-emulgatoren einsetzt.

## Claims

1. Emulsions containing - based on the total weight of the emulsion -
a) 0.1 to 50% by weight conjugated linoleic acid or derivatives of conjugated linoleic acid
b) 0.1 to 30% by weight vegetable lecithin mixtures
c) 0 to 20% by weight co-emulsifiers
d) 0 to 70% by weight polyols
e) 0 to 70% by weight carbohydrates
f) 0 to 1 % by weight antioxidants
g) 20 to 99% by weight aqueous phase,
with the proviso that the emulsion contains no other oils and fats except for the triglycerides of components a), b) and/or c) optionally present.

2. Emulsions as claimed in claim 1, **characterized in that** triglycerides of conjugated linoleic acid are used as component a).

3. Emulsions as claimed in claims 1 and/or 2, **characterized in that** they contain at least 10% by weight polyols and/or at least 10% by weight carbohydrates.

4. Emulsions as claimed in claims 1 to 3, **characterized in that** they contain polysorbates as co-emulsifiers.

5. Emulsions as claimed in claims 1 to 4, **characterized in that** they contain glycerol and/or sorbitol as polyols.

6. Emulsions as claimed in claims 1 to 5, **characterized in that** they contain glucose and/or sucrose as carbohydrates.

7. Beverages and dairy products containing the emulsions claimed in claim 1.

8. Beverages and dairy products as claimed in claim 8 containing 0.1 to 20% by weight of the emulsions claimed in claim 1, based on the total weight of the CLA-containing foods.

9. A process for the production of CLA-containing beverages in which
a) emulsifiers containing CLA and/or derivatives of CLA are directly pre-homogenized in the beverage as aqueous phase on the rotor/stator principle and
b) are subsequently subjected to high-pressure homogenization,
vegetable lecithin mixtures and optionally co-emulsifiers being used as emulsifiers.

## Revendications

1. Emulsions, contenant :
a) 0,1 à 50 % en poids d'acide linoléique conjugué ou de dérivés de l'acide linoléique conjugué
b) 0,1 à 30 % en poids de mélanges de lécithines végétales
c) 0 à 20 % en poids de co-émulsifiants
d) 0 à 70 % en poids de polyols
e) 0 à 70 % en poids d'hydrates de carbone
f) 0 à 1 % en poids d'antioxydants
g) 20 à 99 % en poids de phase aqueuse,
rapporté au poids total de l'émulsion,
étant précisé que l'émulsion ne contient pas d'autres huiles et graisses, à l'exception des triglycérides des composants a) et b) et/ou c) éventuellement présents.

2. Emulsions selon la revendication 1,
**caractérisées en ce que**
l'on utilise, comme composant a), des triglycérides de l'acide linoléique conjugué.

3. Emulsions selon la/les revendication(s) 1 et/ou 2,
**caractérisées en ce qu'**
elles contiennent au moins 10 % en poids de polyols et/ou au moins 10 % en poids d'hydrates de carbone.

4. Emulsions selon les revendications 1 à 3,
**caractérisées en ce qu'**
elles contiennent, des polysorbates comme co-émulsifiants.

5. Emulsions selon les revendications 1 à 4,
**caractérisées en ce qu'**
elles contiennent, du glycérol et/ou du sorbitol comme polyols.

6. Emulsions selon les revendications 1 à 5,
**caractérisées en ce qu'**
elles contiennent, du glucose et/ou du saccharose comme hydrates de carbone.

7. Boissons et produits laitiers contenant des émulsions selon la revendication 1.

8. Boissons et produits laitiers selon la revendication 7, contenant 0,1 à 20 % en poids des émulsions selon la revendication 1, rapporté au poids total du produit alimentaire contenant de l'acide linoléique conjugué.

9. Procédé pour la production de boissons contenant de l'acide linoléique conjugué, selon lequel
a) on pré-homogénéise des émulsifiants avec de l'acide linoléique conjugué et/ou des dérivés de l'acide linoléique conjugué, directement dans la boisson sous forme de phase aqueuse, par un moyen reposant sur le principe du rotor-stator, et
b) on homogénéise ensuite sous haute pression,
des mélanges de lécithines végétales et, le cas échéant, de co-émulsifiants étant utilisés comme émulsifiants.
